# EUROPEAN PATENT APPLICATION

(11) **EP 4 098 673 A1**
(43) Date of publication of application: **07.12.2022**
(21) Application number: 20916501.8
(22) Date of filing: 25.11.2020
(51) Int. Cl.: C08F 220/18, C08K 5/13, C08K 5/3435, C08K 5/3477, C08L 33/06

(54) **POLYMER COMPOSITION, MOLDED BODY, AND OPTICAL MEMBER**

(30) Priority: 30.01.2020 JP 2020013592
(71) Applicant: SUMITOMO CHEMICAL COMPANY, LIMITED, Tokyo 103-6020 (JP)
(72) Inventor: OKAZAKI, Ryosuke, Niihama-shi, Ehime 792-8521 (JP); MANABE, Makoto, Niihama-shi, Ehime 792-8521 (JP)
(74) Representative: Global IP Europe Patentanwaltskanzlei
(86) International application number: PCT/JP2020/043792
(87) International publication number: WO 2021/152981

(57) **Abstract**

Provided are a polymer composition capable of achieving both thermal stability and thermal deterioration-resistant characteristics in a well-balanced manner, and a molded article and an optical member each containing the polymer composition.

A polymer composition contains: a polymer including a structural unit derived from a (meth)acrylate and a structural unit derived from (meth)acrylic acid; and at least one compound (A) selected from the group consisting of 4-tert-butylcatechol, 6-tert-butyl-2,4-xylenol, paramethoxyphenol, hydroquinone, 2,2,6,6-tetramethylpiperidinyl-1-oxile, 4-hydroxy-2,2,6,6-tetramethylpiperidinyl-1-oxile, and triphenyl verdazyl. The content of compound (A) is 1 ppm by mass to 10 ppm by mass.

## Description

### TECHNICAL FIELD

The present invention relates to a polymer composition, and a molded article and an optical member each containing the polymer composition.

### BACKGROUND ART

For example, conventionally, a halogen lamp has been mainly used for a light for a vehicle such as an automobile, particularly for a tail lamp or a head lamp. Therefore, a raw material of an optical member such as an optical lens used for a light is required to have high heat resistance, and conventionally, inorganic glass has been generally used as the raw material.

However, in recent years, an LED lamp has been used as a light source of a lamp for a vehicle in place of a conventional halogen lamp. When an LED lamp is used as a light source, a light-transmissive optical member covering the LED lamp is not required to have heat resistance as high as that of inorganic glass, and an acrylic resin or a polycarbonate resin having excellent transparency has been used.

For example, Patent Document 1 below describes that the content of 4-methoxyphenol is 0.3 ppm or less in an acrylic resin containing a structural unit derived from methyl methacrylate and a structural unit derived from methyl acrylate in order to obtain an acrylic resin having excellent transparency.

### PRIOR ART DOCUMENTS

### PATENT DOCUMENTS

Patent Document 1: JP-A-2004-323770

### SUMMARY OF THE INVENTION

### PROBLEMS TO BE SOLVED BY THE INVENTION

In an LED lamp used as a light source of a light for a vehicle, heat generation of an LED element itself is certainly less than that of a conventional halogen lamp or the like, but for example, higher luminance of the LED lamp is required and higher luminance of the LED lamp is aimed for. In such a circumstance, heat generation of a member associated with the LED element, such as a substrate including a control circuit, may be significant, and therefore thermal stability is still required.

In addition, in an optical member manufactured using a conventional acrylic resin or polycarbonate resin, the amount of light emitted from the optical member may be reduced due to deterioration over time due to heat emitted from a light source, or the wavelength of emitted light may be different from a desired wavelength due to an increase in yellowness of the optical member. Therefore, in order to suppress such deterioration due to heat, thermal deterioration-resistant characteristics are required.

However, for example, the acrylic resin according to Patent Document 1 describe above cannot sufficiently satisfy the above requirement.

### MEANS FOR SOLVING THE PROBLEMS

The present inventors made intensive studies in order to solve the above problems, and as a result, have found that the above problems can be solved by setting the content of a predetermined compound contained in a polymer composition within a predetermined range, and have completed the present invention.

That is, the present invention provides the following [1] to [9].
[1] A polymer composition containing:
   a polymer including a structural unit derived from a (meth)acrylate and a structural unit derived from (meth)acrylic acid; and
   at least one compound (A) selected from the group consisting of 4-tert-butylcatechol, 6-tert-butyl-2,4-xylenol, paramethoxyphenol, hydroquinone, 2,2,6,6-tetramethylpiperidinyl-1-oxile, 4-hydroxy-2,2,6,6-tetramethylpiperidinyl-1-oxile, and triphenyl verdazyl, in which
   the content of the compound (A) is 1 ppm by mass to 10 ppm by mass.
[2] The polymer composition according to [1], in which the content of the compound (A) is 1 ppm by mass to 7 ppm by mass.
[3] The polymer composition according to [1] or [2], in which the compound (A) is 4-methoxyphenol.
[4] The polymer composition according to any one of [1] to [3], in which
   with respect to the total content 100 mol% of all structural units contained in the polymer,
   the content of the structural unit derived from a (meth)acrylate is 70 mol% to 99.99 mol%, and
   the content of the structural unit derived from (meth)acrylic acid is 0.01 mol% to 30.0 mol%.
[5] The polymer composition according to any one of [1] to [4], in which
   the structural unit derived from a (meth)acrylate is a structural unit derived from methyl methacrylate, and
   the structural unit derived from (meth)acrylic acid is a structural unit derived from methacrylic acid.
[6] The polymer composition according to any one of [1] to [5], in which the polymer further includes a glutaric anhydride structural unit.
[7] The polymer composition according to [6], in which
   with respect to the total content 100 mol% of all structural units contained in the polymer,
   the content of the structural unit derived from a (meth)acrylate is 70 mol% to 99.98 mol%,
   the content of the structural unit derived from (meth)acrylic acid is 0.01 mol% to 20.0 mol%, and
   the content of the glutaric anhydride structural unit is 0.01 mol% to 10 mol%.
[8] A molded article containing the polymer composition according to any one of [1] to [7].
[9] An optical member containing the molded article according to [8].

### EFFECT OF THE INVENTION

The present invention can provide a polymer composition excellent in thermal stability and thermal deterioration-resistant characteristics, and a molded article and an optical member each containing the polymer composition.

### MODE FOR CARRYING OUT THE INVENTION

Hereinafter, an embodiment of the present invention will be described in detail. The present invention is not limited by the following description, and components of the present invention can be appropriately changed without departing from the gist of the present invention.

### 1. Description of common terms

Hereinafter, meanings of terms used here will be described. Unless otherwise described, the meanings of the terms here are as follows.

A "substituent" is a monovalent group, and examples thereof include an alkyl group, a cycloalkyl group, an aryl group, an alkyloxy group, a cycloalkyloxy group, and a halogen atom.

A "halogen atom" includes a fluorine atom, a chlorine atom, a bromine atom, and an iodine atom.

An "aromatic hydrocarbon" includes an aromatic hydrocarbon having a monocyclic structure, an aromatic hydrocarbon having a condensed ring structure, and an aromatic hydrocarbon having a structure in which two or more aromatic hydrocarbons selected from the group consisting of an aromatic hydrocarbon having a monocyclic structure and an aromatic hydrocarbon having a condensed ring structure are bonded to each other. The aromatic hydrocarbon includes a structure in which an alicyclic hydrocarbon is further condensed with an aromatic hydrocarbon having a monocyclic structure, an aromatic hydrocarbon having a condensed ring structure, or an aromatic hydrocarbon having a structure in which two or more aromatic hydrocarbons selected from the group consisting of an aromatic hydrocarbon having a monocyclic structure and an aromatic hydrocarbon having a condensed ring structure are bonded to each other.

Examples of the aromatic hydrocarbon having a monocyclic structure include benzene. Examples of the aromatic hydrocarbon having a condensed ring structure include indene, naphthalene, fluorene, phenanthrene, anthracene, and pyrene. Examples of the aromatic hydrocarbon having a structure in which two or more structures selected from the group consisting of an aromatic hydrocarbon having a monocyclic structure and an aromatic hydrocarbon having a condensed ring structure are bonded to each other include biphenyl. Examples of the aromatic hydrocarbon having a structure in which an alicyclic hydrocarbon is further condensed with an aromatic hydrocarbon having a structure in which two or more aromatic hydrocarbons selected from the group consisting of an aromatic hydrocarbon having a monocyclic structure and an aromatic hydrocarbon having a condensed ring structure are bonded to each other include tetralin.

An "alkyl group" may be linear, branched, or cyclic.

The number of carbon atoms of the alkyl group is usually 1 or more and 20 or less, preferably 1 or more and 12 or less, more preferably 1 or more and 8 or less, and still more preferably 1 or more and 6 or less.

Note that, here, the "number of carbon atoms" does not include the number of carbon atoms of a substituent.

Specific examples of the alkyl group include a methyl group, an ethyl group, a n-propyl group, an isopropyl group, a n-butyl group, an isobutyl group, a sec-butyl group, a tert-butyl group, a n-pentyl group, a 2,2-dimethylpropyl group, a n-hexyl group, a 2-methylpentyl group, a n-heptyl group, a n-octyl group, a 3,7-dimethyloctyl group, a 2-ethylhexyl group, a n-nonyl group, a n-decyl group, a n-undecyl group, a n-dodecyl group, a n-tridecyl group, a n-tetradecyl group, a n-pentadecyl group, a n-hexadecyl group, a n-heptadecyl group, a n-octadecyl group, a n-nonadecyl group, and a n-icosyl group.

The alkyl group optionally further has a substituent. The alkyl group may be, for example, an alkyl group having a fluorine atom as a substituent.

Specific examples of the alkyl group having a fluorine atom as a substituent include a 2,2,2-trifluoroethyl group, a 3,3,3-trifluoropropyl group, a 4,4,4-trifluorobutyl group, a 5,5,5-trifluoropentyl group, a 6,6,6-trifluorohexyl group, a 7,7,7-trifluoroheptyl group, an 8,8,8-trifluorooctyl group, a 9,9,9-trifluorononyl group, and a 10,10,10-trifluorodecyl group.

An "alkyloxy group" may be linear or branched.

The number of carbon atoms of the alkyloxy group is usually 1 or more and 20 or less, preferably 1 or more and 12 or less, more preferably 1 or more and 8 or less, and still more preferably 1 or more and 6 or less.

Examples of an alkyl group included in the alkyloxy group include those exemplified as the alkyl group.

Specific examples of the alkyloxy group include a methoxy group, an ethoxy group, a n-propoxy group, an isopropoxy group, a n-butoxy group, a sec-butoxy group, a tert-butoxy group, a n-pentyloxy group, a 2,2-dimethylpropoxy group, a n-hexyloxy group, a 2-methylpentyloxy group, a n-heptyloxy group, a n-octyloxy group, a 3,7-dimethyloctyloxy group, a 2-ethylhexyloxy group, a n-nonyloxy group, a n-decyloxy group, a n-undecyloxy group, a n-dodecyloxy group, a n-tridecyloxy group, a n-tetradecyloxy group, a n-pentadecyloxy group, a n-hexadecyloxy group, a n-heptadecyloxy group, a n-octadecyloxy group, a n-nonadecyloxy group, and a n-icosyloxy group.

The alkyloxy group optionally further has a substituent. The alkyloxy group may be, for example, an alkyloxy group having a fluorine atom as a substituent.

Specific examples of the alkyloxy group having a fluorine atom as a substituent include a trifluoromethoxy group, a pentafluoroethoxy group, a perfluorobutoxy group, a perfluorohexyloxy group, and a perfluorooctyloxy group.

An "aryl group" means a remaining atomic group obtained by removing one hydrogen atom directly bonded to a carbon atom constituting a ring from an aromatic hydrocarbon.

The number of carbon atoms of the aryl group is usually 6 to 60, preferably 6 to 18, and more preferably 6 to 12.

Specific examples of the aryl group include a phenyl group, an indenyl group, a naphthyl group, a fluorenyl group, a phenanthryl group, an anthryl group, and a pyrenyl group.

The aryl group optionally further has a substituent. Examples of the substituent which the aryl group optionally has include a halogen atom, an alkyl group, and an alkyloxy group.

Specific examples of the aryl group having a substituent include a tolyl group, a xylyl group, a mesityl group, a cumenyl group, a methylnaphthyl group, a methoxyphenyl group, and a chlorophenyl group.

### 2. Polymer composition

A polymer composition of the present embodiment contains: a polymer including a structural unit derived from a (meth)acrylate and a structural unit derived from (meth)acrylic acid; and at least one compound (A) selected from the group consisting of 4-tert-butylcatechol, 6-tert-butyl-2,4-xylenol, paramethoxyphenol, hydroquinone, 2,2,6,6-tetramethylpiperidinyl-1-oxile, 4-hydroxy-2,2,6,6-tetramethylpiperidinyl-1-oxile, and triphenyl verdazyl, in which the content of compound (A) is 1 ppm by mass to 10 ppm by mass.

Hereinafter, components that can be contained in the polymer composition of the present embodiment will be specifically described.

### (1) Polymer

The polymer includes a structural unit derived from a (meth)acrylate and a structural unit derived from (meth)acrylic acid. First, each of these structural units will be described.

### (1-1) Structural unit derived from (meth)acrylate and structural unit derived from (meth)acrylic acid

The polymer contained in the polymer composition of the present embodiment includes a structural unit derived from a (meth)acrylate and a structural unit derived from (meth)acrylic acid.

Here, the term "(meth)" means to include both a case of including a methyl group and a case of not including a methyl group.

Specifically, the "(meth)acrylate" means to include a methacrylate and an acrylate, and can be one or both of these.

In addition, the "(meth)acrylate" means to include methacrylic acid and acrylic acid, and can be one or both of these.

Furthermore, a "(meth)acryloyl group" contained in the (meth)acrylate and the (meth)acrylic acid means to include an "acryloyl group" and a "methacryloyl group", and can be one or both of these.

When the "(meth)acryloyl group" is both an "acryloyl group" and a "methacryloyl group", the total number of these groups is the number of (meth)acryloyl groups.

The methacrylate that can constitute the "structural unit derived from a (meth)acrylate" in the polymer contained in the polymer composition of the present embodiment is a monomer represented by the following formula (1).

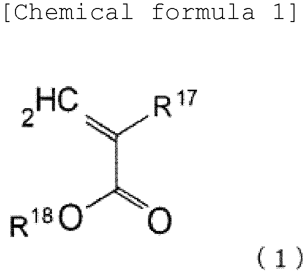

In formula (1), R17 represents a methyl group, and R18 represents an alkyl group optionally having a substituent or an aryl group optionally having a substituent.

The methacrylate represented by the formula (1) is not particularly limited. Examples of the methacrylate represented by formula (1) include methyl methacrylate, ethyl methacrylate, butyl methacrylate, propyl methacrylate, isopropyl methacrylate, cyclohexyl methacrylate, phenyl methacrylate, (2-ethylhexyl) methacrylate, (tert-butylcyclohexyl) methacrylate, benzyl methacrylate, and (2,2,2-trifluoroethyl) methacrylate. As the methacrylate, one type thereof as a monomer may be used singly to form a polymer, or two or more types thereof may be used in combination to form a polymer.

The acrylate that can constitute the "structural unit derived from a (meth)acrylate" in the polymer contained in the polymer composition of the present embodiment is a monomer represented by the following formula (2).

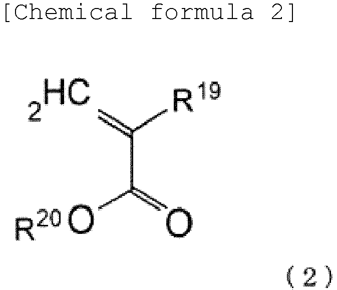

In formula (2), R19 represents a hydrogen atom, and R20 represents an alkyl group optionally having a substituent or an aryl group optionally having a substituent.

The number of carbon atoms of the alkyl group is preferably 1 or more and 12 or less, more preferably 1 or more and 8 or less, and still more preferably 1 or more and 6 or less.

The acrylate represented by the formula (2) is not particularly limited. Examples of the acrylate represented by formula (7) include methyl acrylate, ethyl acrylate, n-propyl acrylate, n-butyl acrylate, sec-butyl acrylate, 2-ethylhexyl acrylate, cyclohexyl acrylate, and phenyl acrylate.

As the acrylate, one type thereof may be used singly to form a polymer, or two or more types thereof may be used in combination to form a polymer.

Examples of the "structural unit derived from (meth)acrylic acid" include a structural unit derived from methacrylic acid, represented by the following formula (3), and a structural unit derived from acrylic acid, represented by the following formula (4).

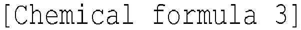

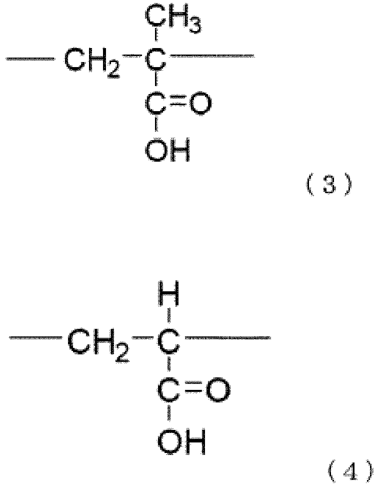

In the present embodiment, the structural unit derived from a (meth)acrylate is preferably a structural unit derived from methyl methacrylate, and the structural unit derived from (meth)acrylic acid is preferably a structural unit derived from methacrylic acid.

### (1-2) Glutaric anhydride structural unit

The polymer contained in the polymer composition of the present embodiment can further include a glutaric anhydride structural unit represented by the following formula (5).

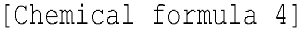

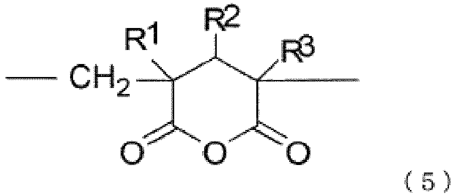

In formula (5), R1, R2, and R3 each independently represent a hydrogen atom or an alkyl group optionally having a substituent.

The glutaric anhydride structural unit can be generated by synthesizing a polymer from (meth)acrylic acid as a monomer and (meth)acrylic acid as a monomer, and then subjecting the polymer to cyclization condensation by a transesterification reaction between an ester group and a carboxy group. That is, the polymer composition of the present embodiment includes a structural unit derived from (meth)acrylic acid or a (meth)acrylate as a monomer, and can further include a glutaric anhydride structural unit derived from a structural unit derived from (meth)acrylic acid or (meth)acrylic acid as a monomer.

For example, when methyl methacrylate and methacrylic acid are used as monomers, a glutaric anhydride structural unit represented by the following formula (6) can be formed.

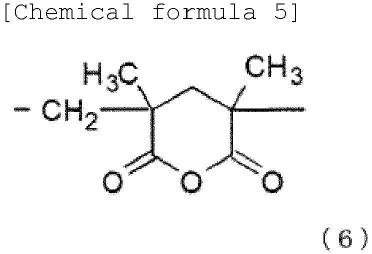

### (1-3) Other structural unit

The polymer contained in the polymer composition of the present embodiment may further contain a structural unit other than those described above as long as the object of the present invention is not impaired.

### (1-4) Content of structural unit

### (1-4-1) Contents of structural unit derived from (meth)acrylate and structural unit derived from (meth)acrylic acid

In the present embodiment, the content of the structural unit derived from a (meth)acrylate is usually 70 mol% or more and 99.99 mol% or less (70 mol% to 99.99 mol%), preferably 70 mol% or more and 99.98 mol% or less (70 mol% to 99.98 mol%), and more preferably 74.64 mol% or more and 98.98 mol% or less with respect to the total content (100 mol%) of all structural units contained in the polymer.

When the content of the structural unit derived from a (meth)acrylate (particularly methyl methacrylate or methyl acrylate) is within the above range, weather resistance and optical characteristics of the polymer can be improved.

In addition, the content of the structural unit derived from (meth)acrylic acid is usually 0.01 mol% or more and 30 mol% or less (0.01 mol% to 30.0 mol%), preferably 0.01 mol% or more and 20.0 mol% or less (0.01 mol% to 20.0 mol%), more preferably 1 mol% or more and 26 mol% or less, still more preferably 6 mol% or more and 26 mol% or less, further still more preferably 7.48 mol% or more and 25.2 mol% or less, and particularly preferably 10 mol% or more and 25.2 mol% or less with respect to the total content of all structural units contained in the polymer.

By inclusion of the structural unit derived from (meth)acrylic acid at the content (mol%) within the above range, a glass transition temperature (Tmg) and a water absorption ratio can be set to suitable values particularly when the polymer composition is used as a raw material of an optical member such as an optical lens.

### (1-4-2) Content of glutaric anhydride structural unit

Furthermore, the content of the glutaric anhydride structural unit is usually 0.01 mol% or more and 10 mol% or less (0.01 mol% to 10 mol%), preferably 0.02 mol% or more and 9 mol% or less, more preferably 0.02 mol% or more and 8 mol% or less, still more preferably 0.02 mol% or more and 5 mol% or less, further still more preferably 0.02 mol% or more and 4.1 mol% or less, further still more preferably 0.02 mol% or more and less than 3 mol%, further still more preferably 0.02 mol% or more and 2.5 mol% or less, and particularly preferably 0.02 mol% or more and 0.16 mol% or less with respect to the total content of all structural units contained in the polymer.

The glutaric anhydride structural unit is a structural unit that can be generated by a polymerization reaction and cyclization condensation of a (meth)acrylate and (meth)acrylic acid in granulation molding. However, the glutaric anhydride structural unit does not particularly affect the action and effect of the present invention as long as the content thereof is within the above range.

When the content of the glutaric anhydride structural unit is 0.01 mol% or more, the heat resistance of the polymer can be improved. On the other hand, when the content of the glutaric anhydride structural unit is 10 mol% or less, the yellowness of a molded article of the polymer composition can be suppressed. In particular, when the content of the glutaric anhydride structural unit exceeds 10 mol%, the yellowness of a molded article is significantly increased. By adjusting the content of the glutaric anhydride structural unit within an appropriate predetermined range in this way, the yellowness of the molded article can be suppressed, and the molded article is suitably used for an optical member such as an optical lens. The content (mol%) of the glutaric anhydride structural unit in the polymer can be adjusted in consideration of the type and ratio (mol% or % by mass) of a monomer and a polymerization method.

### (1-4-3) Content of other structural unit

The content of the other structural unit is usually 0.01 mol% or more and 10 mol% or less, preferably 0.02 mol% or more and 9 mol% or less, more preferably 0.02 mol% or more and 8 mol% or less, still more preferably 0.02 mol% or more and 5 mol% or less, further still more preferably 0.02 mol% or more and 4.1 mol% or less, further still more preferably 0.02 mol% or more and less than 3 mol%, particularly preferably 0.02 mol% or more and 2.5 mol% or less, and especially preferably 0.02 mol% or more and 0.16 mol% or less with respect to the total content of all structural units contained in the polymer.

Specific examples of a suitable content of each structural unit in the polymer of the present embodiment include an aspect in which, with respect to the total content 100 mol% of all structural units contained in the polymer, the content of the structural unit derived from a (meth)acrylate is 70 mol% to 99.98 mol%, the content of the structural unit derived from (meth)acrylic acid is 0.01 mol% to 20.0 mol%, and the content of the glutaric anhydride structural unit is 0.01 mol% to 10 mol%.

In the present embodiment, the content (mol%) of a structural unit contained in the polymer is a numerical value that can be calculated by obtaining an integral value of peaks in a peak range corresponding to each structural unit by a 13C-NMR method, or a numerical value that can be calculated using a 13C-NMR method and auxiliarily further using a 1H-NMR method and/or an IR method depending on a contained structure.

### (2) Compound (A)

The polymer composition of the present embodiment contains compound (A). Compound (A) is specifically at least one compound selected from the group consisting of 4-tert-butylcatechol, 6-tert-butyl-2,4-xylenol, paramethoxyphenol, hydroquinone, 2,2,6,6-tetramethylpiperidinyl-1-oxile, 4-hydroxy-2,2,6,6-tetramethylpiperidinyl-1-oxile, and triphenyl verdazyl.

Here, compound (A) is a compound capable of functioning as a polymerization inhibitor of a monomer, and is usually a component added from a viewpoint of improving storage stability when the monomer is stored. For example, since (meth)acrylic acid as a monomer in the polymer composition of the present embodiment has high reactivity, compound (A) as a polymerization inhibitor can be usually added so as to have a concentration of about several hundred ppm by mass, whereas since a (meth)acrylate as a monomer has relatively low reactivity, compound (A) as a polymerization inhibitor can be usually added so as to have a concentration of about 10 ppm by mass.

Compound (A) contained in the polymer composition of the present embodiment may be derived from compound (A) added as a polymerization inhibitor to a monomer as a raw material, may be derived from compound (A) actively added to a monomer and/or the polymer composition in order to set the content of compound (A) within a predetermined range in the polymer composition, or may be derived from both of these.

Compound (A) is preferably 4-tert-butylcatechol, 6-tert-butyl-2,4-xylenol, or 4-methoxyphenol, and more preferably 4-methoxyphenol.

In the polymer composition of the present embodiment, the content of compound (A) is preferably 1 ppm by mass to 10 ppm by mass, and more preferably 1 ppm by mass to 9 ppm by mass. The content of compound (A) is more preferably 1 ppm by mass to 7 ppm by mass, and still more preferably 2 ppm by mass to 7 ppm by mass particularly from a viewpoint of improving the total light transmittance of a molded article (optical member), reducing the yellowness, and improving the thermal deterioration-resistant characteristics.

The polymer composition of the present embodiment may contain a trace component that can be inevitably mixed therein in a manufacturing step or the like (a residue of an additive such as a polymerization initiator, a polymerization stabilizer, or a molecular weight modifier).

The polymer composition of the present embodiment can have, for example, a melt flow rate (MFR) value of usually 1 or more and 7 or less, preferably 2 or more and 6 or less, more preferably 4 or more and 6 or less at 230°C under a load of 3.8 kg.

Here, the MFR value is a value measured at 230°C under a load of 3.8 kg by the method defined in JIS K7210-1999.

By setting the MFR value within such a range, fluidity can be made preferable when the polymer composition is used as a raw material of an optical member such as an optical lens, for example, when the polymer composition is molded by injection molding or the like to form a molded article.

### 3. Method for manufacturing polymer composition

A method for manufacturing the polymer composition of the present embodiment is not particularly limited. Examples of a polymerization method for manufacturing the polymer composition (polymer contained in the polymer composition) include a suspension polymerization method, a solution polymerization method, and a bulk polymerization method. As the polymerization method of the polymer composition of the present embodiment, it is particularly preferable to adopt the suspension polymerization method. Hereinafter, an embodiment using the suspension polymerization method will be described in detail.

The suspension polymerization method according to the method for manufacturing the polymer composition of the present embodiment can be performed by, for example, putting predetermined amounts of water, a polymerization initiator, a chain transfer agent, a suspension stabilizer, and other additives and the like as necessary into an autoclave, supplying a (meth)acrylate and (meth)acrylic acid as monomers thereto under stirring, and heating the mixture.

The amount of water used only needs to be, for example, 1 to 5 times, particularly 1 to 3 times the amount of the monomers in terms of volume ratio.

The polymerization initiator used in the suspension polymerization method of the present embodiment is not particularly limited. Examples of the polymerization initiator include a radical polymerization initiator such as a peroxide including lauryl peroxide and 1,1-di(tert-butylperoxy) cyclohexane or an azo compound including azobisisobutyronitrile. As the polymerization initiator, one type thereof may be used singly, or two or more types thereof may be used in combination.

The chain transfer agent used in the suspension polymerization method of the present embodiment is not particularly limited. Examples of the chain transfer agent include a mercaptan such as n-dodecyl mercaptan (particularly, 1-dodecyl mercaptan), n-butyl mercaptan, n-octyl mercaptan, or 2-ethylhexyl thioglycolate. As the chain transfer agent, one type thereof may be used singly, or two or more types thereof may be used in combination.

Examples of the suspension stabilizer used in the suspension polymerization method of the present embodiment include a water-soluble cellulose ether such as methyl cellulose, hydroxyethyl cellulose, hydroxypropyl cellulose, or hydroxypropyl methyl cellulose. In addition, as the suspension stabilizer, a water-soluble polymer such as a partially saponified vinyl alcohol, an acrylic acid polymer, or gelatin can also be used.

In the suspension polymerization method applied in the present embodiment, for example, a polymer composition which is a slurry-like reaction product obtained after a polymerization reaction is dehydrated, washed as necessary, and then dried to obtain polymer composition beads as a bead-like polymer composition. The polymer composition beads may be used as they are, or may be molded by extrusion granulation using an extruder (for example, a degassing extruder) to form polymer composition pellets as a pellet-like polymer composition.

In the present embodiment, a suitable polymer composition capable of suppressing the yellowness of a molded article can be manufactured not only by adjusting the content (mol% or % by mass) of a monomer (structural unit) but also by selecting a suitable polymerization method and molding method and appropriately adjusting conditions for these methods.

Specifically, for example, in extrusion granulation using an extruder, the temperature can be set to an appropriate temperature that is not too high (for example, 190°C or higher and 250°C or lower, preferably 210°C or higher and 220°C or lower), or, for example, residence time in the extruder can be set to an appropriate time that is not too long.

For example, when a screw rotational speed of the extruder is 60 rpm or more and 100 rpm, preferably 80 rpm, it is only required to set a throughput to 1 kg/Hr or more and 2.0 kg/Hr or less, preferably 1 kg/Hr or more and 1.5 kg/Hr or less in terms of a throughput of the polymer composition per residence time in the extruder, or not to heat the polymer composition for an excessively long time at a high temperature (for example, about 290°C) in a posttreatment.

By appropriately selecting and setting the conditions for extrusion granulation as described above, it is possible to effectively prevent excessive generation of the glutaric anhydride structural unit due to ring-closing condensation.

As a result, the content (mol%) of the glutaric anhydride structural unit in the polymer can be adjusted within the above-described predetermined range, and the yellowness of a molded article can be more effectively suppressed.

As described above, the polymer composition (polymer composition beads and polymer composition pellets) of the present embodiment contains a predetermined amount of compound (A) as described above.

In a case where the content of compound (A) in the polymer composition of the present embodiment is adjusted in a direction of decreasing the content of compound (A), when the above manufacturing method, for example, the suspension polymerization method is performed, by previously causing a monomer, that is, a (meth)acrylate inevitably containing compound (A) to pass through, for example, an ion exchange resin, a synthetic adsorbent, activated carbon, or the like and washing the monomer, the content of compound (A) in the monomer or in a polymer composition to be manufactured can be adjusted in a direction of decreasing the content of compound (A) or not containing compound (A).

In addition, when the content of compound (A) in the polymer composition of the present embodiment is adjusted in a direction of decreasing the content of compound (A), for example, also by washing a reaction solution after completion of the polymerization reaction, that is, the polymer composition using a washing solution such as water, the content of compound (A) in the polymer composition can be decreased, or the polymer composition not containing compound (A) can be obtained.

In a case where the content of compound (A) in the polymer composition of the present embodiment is adjusted in a direction of increasing the content of compound (A), for example, when the above manufacturing method, for example, the suspension polymerization method is performed, by previously adding a predetermined amount of compound (A) to the raw material (monomer), the content of compound (A) can be adjusted.

In addition, when the content of compound (A) in the polymer composition of the present embodiment is adjusted in a direction of increasing the content of compound (A), for example, also by adding a predetermined amount of compound (A) to a reaction solution after completion of the polymerization reaction or a polymer composition obtained by washing this reaction solution, the content of compound (A) can be adjusted.

Note that when the content of compound (A) is adjusted before the polymerization reaction is performed, it is only required to wash the (meth)acrylate in consideration of a fact that compound (A) volatilizes due to the extrusion granulation step described above or a step of manufacturing a molded article described later and the content of compound (A) decreases.

### 4. Molded article

A molded article of the present embodiment contains a polymer composition. That is, the molded article of the present embodiment is a molded article obtained by molding the polymer composition described above. The molded article of the present embodiment can have a shape according to a desired use.

The molded article of the present embodiment can be manufactured by any suitable conventionally known manufacturing method.

Specifically, the molded article of the present embodiment can be manufactured, for example, by filling the polymer composition described above into a cavity of a die capable of molding the polymer composition into an intended desired shape, subjecting the polymer composition to a step such as heating or cooling, and then taking out the molded polymer composition from the die.

### 5. Optical member

An optical member of the present embodiment is an optical member containing the above-described molded article. Here, examples of the optical member include an optical lens and a light guide member. Specific examples of the optical lens and the light guide member include a translucent cover that can be used for general lighting devices such as a vehicle light of an automobile, a motorcycle, or the like, a street light, an electric stand, and a general household light.

As described above, the optical member of the present embodiment contains the polymer composition described above. Therefore, the polymer composition, the molded article, and the optical member according to the present embodiment have excellent thermal stability and thermal deterioration-resistant characteristics, and furthermore, can effectively achieve both thermal stability and thermal deterioration-resistant characteristics in a well-balanced manner.

More specifically, for example, assuming a case where the optical member of the present embodiment is applied as an optical lens (cover) of a vehicle lamp, even if the optical member is continuously exposed to heat generated from an LED lamp or the like as a light source, a weight reduction ratio of the optical member (molded article) can be effectively reduced.

Here, the weight reduction of the optical member particularly due to heating is mainly caused by decomposition of the polymer contained in the polymer composition constituting the optical member, and it can be said that the smaller the polymerization reduction ratio, the better the thermal stability.

The weight reduction ratio (% by mass) can be calculated, for example, by measuring and comparing the weights of the polymerizable composition, the polymerizable composition pellets, and a molded article (optical member) thereof before and after the heat treatment using a thermogravimetric/differential thermal analyzer (for example, "TG/DTA 7200" manufactured by Hitachi High-Tech Science Corporation) available on the market.

As conditions for the heat treatment, for example, conditions in which first, the temperature is raised from room temperature to 40°C, next the temperature is raised from 40°C to 300°C, and subsequently the temperature is held at 300°C for 60 minutes at an air flow rate of 200 mL/min and a temperature rising rate of 20°C/min can be adopted.

The weight reduction ratio of each of the polymerizable composition of the present embodiment, the polymerizable composition pellets, and a molded article (optical member) thereof is preferably 43% by mass or less, more preferably 42% or less, and still more preferably 41.5% or less.

In addition, similarly, even when each of the polymerizable composition, the polymerizable composition pellets, and a molded article (optical member) thereof of the present embodiment is exposed to heat generated from an LED lamp or the like as a light source, deterioration of the total light transmittance and progress of the yellowness can be effectively suppressed. That is, better thermal deterioration-resistant characteristics can be obtained.

The total light transmittance and the yellowness can be measured using, for example, a test piece obtained by mirror-finishing an end surface of a molded article obtained by molding the polymer composition of the present embodiment with a spectrophotometer (for example, "Hitachi Spectrophotometer U-4000" manufactured by Hitachi High-Tech Fielding Co., Ltd.) available on the market.

Specifically, for example, for a light beam in a range of 380 nm to 780 nm at a wavelength when an optical path length is set to 50 mm, the transmittance (total light transmittance (hereinafter referred to as "Tt (%)") and the yellowness (hereinafter referred to as "YI (no unit)") are measured using a test piece before and after heat treatment (accelerated deterioration treatment) in which the test piece is allowed to stand at 120°C for 1040 hours, and a difference (ΔTt (%)) between the total light transmittance before the treatment (initial) and the total light transmittance after the treatment and a difference (ΔYI (no unit)) between the yellowness before the treatment (initial) and the yellowness after the treatment are calculated. Evaluation can be thereby performed.

ΔTt (%) of each of the polymerizable composition of the present embodiment and a molded article (optical member) thereof is preferably -12.0 or more, more preferably -11.1 or more, still more preferably -11.0 or more, and further still more preferably -10.8 or more.

ΔYI of each of the polymerizable composition of the present embodiment, the polymerizable composition pellets, and a molded article (optical member) thereof is preferably 27.1 or less, more preferably 25.0 or less, still more preferably 24.7 or less, further still more preferably 24.0 or less, and further still more preferably 23.4 or less.

### 6. Method for manufacturing optical member

An optical member of the present embodiment can be manufactured by molding the polymer composition described above by, for example, an injection molding method.

Specifically, the optical member of the present embodiment can be manufactured by using the polymer composition described above as a molding material, injecting and filling the polymer composition in a molten state into a cavity of a die, subsequently cooling the polymer composition, and then peeling off and taking out the molded article from the die.

More specifically, the optical member of the present embodiment can be manufactured, for example, by introducing the polymer composition pellets as a molding material from a hopper into a cylinder, melting the polymer composition pellets while a screw is rotated, retracting the screw, filling a predetermined amount of the polymer composition pellets into the cylinder, injecting and filling the molten polymer composition (pellets) into a cavity of a die while pressure is applied thereto by advancing the screw, holding the pressure for a fixed time until the die is sufficiently cooled, then opening the die, and peeling off and taking out a molded article from the die.

Conditions for manufacturing the optical member of the present embodiment (for example, a melting temperature of a molding material in a cavity of a die, a die temperature at the time of injecting the molding material into the die, pressure to be held after the polymer composition is filled into the die, and the like) can be set appropriately, and are not particularly limited.

### [Examples]

### 1. Preparation of polymer composition

### <Example 1>

In a 5 L autoclave equipped with a stirrer, 1.3 parts by mass of methacrylic acid (manufactured by Nippon Shokubai Co., Ltd.) and 98.7 parts by mass of methyl methacrylate (manufactured by Sumitomo Chemical Co., Ltd.) were mixed to obtain 100 parts by mass of a monomer component.

To 100 parts by mass of the obtained monomer component, 0.4 parts by mass of lauryl peroxide ("Laurox K" manufactured by Kayaku Akzo Co., Ltd.) as a polymerization initiator and 0.45 parts by mass of 1-dodecyl mercaptan ("Thiocarcol 20" manufactured by Kao Corporation) as a chain transfer agent were added to prepare a monomer component solution in which these were dissolved in the monomer component.

With respect to 100 parts by mass of the monomer component, 0.113 parts by mass of hydroxyethyl cellulose ("SANHEC H" manufactured by Sansho Co., Ltd.) as a suspension stabilizer was dissolved in deionized water to prepare 150 parts by mass of a suspension polymerization aqueous phase.

To the monomer component solution, 150 parts by mass of the suspension polymerization aqueous phase was added, and suspension polymerization was performed at a polymerization temperature of 80°C at a stirring speed of 1200 rpm to obtain a slurry-like reaction solution.

The obtained slurry-like reaction solution was washed with 40 L of deionized water, subsequently dehydrated twice using a dehydrator ("centrifuge H-122" manufactured by Kokusan Co., Ltd.), and then dried to obtain polymer composition beads.

To the obtained polymer composition beads, 4-methoxyphenol ("MO123" manufactured by Tokyo Chemical Industry Co., Ltd.) was added in an amount of 0.0002 parts by mass with respect to 100 parts by mass of the amount of the polymer composition beads. Thereafter, the mixture was granulated using an extruder with a 20 mm vent ("ME type Laboplast Mill" manufactured by Toyo Seiki Seisaku-sho, Ltd.) at a screw rotational speed of 80 rpm at a temperature of the polymer composition beads of 220°C at a throughput of 1.0 kg/hour to obtain polymer composition pellets according to Example 1.

### <Examples 2 to 4>

Polymer composition pellets according to Example 2 to 4 were obtained in a similar manner to Example 1 except that the addition amount of 4-methoxyphenol was changed to 0.0005 parts by mass (Example 2), 0.0008 parts by mass (Example 3), and 0.001 parts by mass (Example 4), respectively.

### <Comparative Example 1>

Polymer composition beads were obtained in a similar manner to Example 1. Thereafter, while 4-methoxyphenol was not added to the obtained polymer composition beads, the obtained polymer composition beads were granulated using an extruder with a 20 mm vent ("ME type Laboplast Mill" manufactured by Toyo Seiki Seisaku-sho, Ltd.) at a screw rotational speed of 80 rpm at a temperature of the polymer composition of 220°C at a throughput of 1.0 kg/hour to obtain polymer composition pellets according to Comparative Example 1.

### <Comparative Example 2>

Polymer composition pellets according to Comparative Example 2 were obtained in a similar manner to Example 1 except that the addition amount of 4-methoxyphenol was changed to 0.002 parts by mass.

### 2. Measurement of content of structural unit

The content (mol%) of each structural unit contained in the polymer contained in the polymer composition according to each of Examples 1 to 4 and Comparative Examples 1 and 2 with respect to the total content of all structural units was measured.

The content of the structure was measured by 13C-NMR using a nuclear magnetic resonance apparatus ("Avance 600" (10 mm cryoprobe) manufactured by Bruker).

Specifically, deuterated chloroform was used as a measurement solvent, a measurement temperature was set to 27°C, and measurement was performed by an inverse gate proton decoupling method. Pulse repetition time was set to 20 seconds, the number of integrations was set to 4000, and chloroform was used as a chemical shift value standard. The content of a structural unit derived from methyl methacrylate was determined from an integral value of peaks at 173.0 to 180.4 ppm. The content of a structural unit derived from methacrylic acid was determined from an integral value of peaks at 180.4 to 188.0 ppm. The content of a glutaric anhydride structural unit was determined from an integral value of peaks at 170.0 to 173.0 ppm.

The polymer contained in the polymer composition obtained in each of Examples 1 to 4 and Comparative Examples 1 to 2 was a polymer containing 98.65 mol% of a structural unit derived from methyl methacrylate, 1.2 mol% of a structural unit derived from methacrylic acid, and 0.15 mol% of a glutaric anhydride structural unit.

### 3. Measurement of content of 4-methoxyphenol in polymer composition pellets

### (Creation of calibration curve)

4-methoxyphenol was dissolved in a chloroform solution (containing p-terphenyl which is an internal standard substance in an amount of 0.01% by mass) to prepare standard solutions adjusted such that the content of 4-methoxyphenol was 1 ppm, 5 ppm, 10 ppm, and 50 ppm, respectively.

Gas chromatography mass spectrometry (hereinafter, referred to as "GC-MS measurement") was performed on the prepared standard solutions under the following conditions (hereinafter, referred to as "GC-MS conditions") using the following gas chromatography mass spectrometer to prepare a calibration curve of 4-methoxyphenol.

### [Gas chromatography mass spectrometer]

| | |
|---|---|
| •GC : | "Type 6890" manufactured by Agilent Technologies, Inc. |
| •MS (detector) : | "5973 N type" (SIM mode) manufactured by Agilent Technologies, Inc. |
| •Column : | "DB-WAX series" (30 m × 0.25 mm × 0.25 µm) manufactured by Agilent Technologies, Inc. [GC-MS conditions] |
| •Inlet temperature : | 240°C |
| •Interface temperature: | 240°C |
| •Carrier gas : | helium (1 mL/min) |
| •Split ratio : | 20 : 1 |
| •Injection amount : | 1 µL |

0.1 g of the polymer composition pellets obtained in each of Example 1 to 4 and Comparative Example 1 to 2 were dissolved in 3 mL of a chloroform solution (containing p-terphenyl which is an internal standard substance in an amount of 0.01% by mass), and then the resulting solution was dropwise added to 30 mL of hexane to precipitate a polymer.

Nitrogen gas was sprayed to a filtrate obtained by filtering the precipitated polymer at 40°C, and the resulting solution was concentrated up to 3 mL. The concentrated solution was subjected to GC-MS measurement under the above GC-MS condition using the above gas chromatography mass spectrometer to measure the content (ppm by mass) of 4-methoxyphenol in the polymer composition pellets. Results thereof are indicated in Table 1.

### 4. Evaluation of weight reduction ratio of polymer composition pellets

The polymer composition pellets obtained in each of Examples 1 to 4 and Comparative Examples 1 to 2 were pulverized, and then 9.5 mg of the pulverized product was placed on an aluminum pan ("P/N SSC000E030 Open Sample Pan" manufactured by Hitachi High-Tech Science Corporation, diameter: 5 mm). Thereafter, using a thermogravimetric/differential thermal analyzer ("TG/DTA 7200" manufactured by Hitachi High-Tech Science Corporation), at an air flow rate of 200 mL/min at a temperature rising rate of 20°C/min, first, the temperature was raised from normal temperature to 40°C. Next, the temperature was raised from 40°C to 300°C. Subsequently, a heating treatment was performed in which the temperature was held at 300°C for 60 minutes. Thereafter, the weight was measured, and furthermore, a weight reduction ratio (% by mass) of the polymer composition pellets was calculated, and thermal stability was evaluated. Results thereof are indicated in Table 1.

### 5. Evaluation of total light transmittance and yellowness of molded article

The polymer composition pellets obtained in each of Examples 1 to 4 and Comparative Examples 1 to 2 were dried at 80°C for 12 hours, and then press-molded at a press temperature of 220°C using a press molding machine ("Shindo type ASF hydraulic press" manufactured by Shindo Metal Industry Co., Ltd.) to obtain a molded article. Subsequently, an end surface of the obtained molded article was mirror-finished to obtain a test piece imitating an optical member having a plane size of 50 mm square and a thickness of 3 mm. Using the obtained test piece, transmittance (total light transmittance: Tt (%)) and yellowness (YI (no unit)) for a light beam having a wavelength in a range of 380 nm to 780 nm at an optical path length of 50 mm was measured with a spectrophotometer ("Hitachi Spectrophotometer U-4000" manufactured by Hitachi High-Tech Fielding Co., Ltd.). Results thereof are indicated in Table 1.

The test piece was placed in a constant temperature apparatus ("Perfect Oven PH-101" manufactured by ESPEC CORPORATION) set at 120°C, and subjected to accelerated deterioration treatment in which the test piece was allowed to stand for 1040 hours.

The total light transmittance and the yellowness of the test piece after the accelerated deterioration treatment were measured again in a similar manner to the above, and a difference (ΔTt (%)) between the total light transmittance before treatment (initial) and the total light transmittance after treatment and a difference (ΔYI (no unit)) between the yellowness before treatment (initial) and the yellowness after treatment were calculated. Thermal deterioration-resistant characteristics were thereby evaluated. Results thereof are indicated in Table 1.

**[Table 1]**

| | | | Example 1 | Example 2 | Example 3 | Example 4 | Comparative Example 1 | Comparative Example 2 |
|---|---|---|---|---|---|---|---|---|
| Addition amount of 4-methoxyphenol (parts by mass) | | | 0.0002 | 0.0005 | 0.0008 | 0.001 | 0 | 0.002 |
| Content of 4-methoxyphenol (ppm by mass) | | | 1 | 4 | 7 | 9 | 0 | 15 |
| Thermal stability | Weight reduction ratio (% by mass) | | 42.3 | 41.5 | 42.0 | 42.0 | 47.2 | 41.6 |
| Thermal deterioration-resistant characteristics | Initial | Tt (%) | 88.8 | 88.0 | 87.0 | 87.3 | 89.5 | 86.3 |
| | | YI (-) | 3.6 | 4.5 | 4.8 | 5.0 | 1.6 | 5.9 |
| | After accelerated deterioration treatment | Tt (%) | 78.0 | 77.0 | 76.0 | 75.7 | 78.8 | 74.6 |
| | | YI (-) | 27.0 | 29.1 | 28.5 | 32.1 | 24.8 | 33.5 |
| | ΔTt (%) | | -10.8 | -11.1 | -11.0 | -11.6 | -10.8 | -11.7 |
| | ΔYI (-) | | 23.4 | 24.7 | 23.7 | 27.1 | 23.2 | 27.6 |

As is apparent from Table 1, according to Examples 1 to 4 in which the content of 4-methoxyphenol was 0.001 parts by mass or less (9 ppm by mass or less) per 100 parts by mass of the polymer composition (beads) (particularly, Examples 1 to 3 in which the content of 4-methoxyphenol was 0.0008 parts by mass or less (7 ppm by mass or less)), in a case of comparison with Comparative Examples 1 and 2 in which the requirement of the present invention related to the content of 4-methoxyphenol is not satisfied, the weight reduction ratio could be effectively reduced as compared with Comparative Example 1 not containing 4-methoxyphenol, and the weight reduction ratio could be reduced to the same extent as compared with Comparative Example 2 in which the content of 4-methoxyphenol was larger.

In addition, the degree of deterioration in total light transmittance (ΔTt (%)) and the degree of progress of yellowness (ΔYI) could be suppressed to the same extent as those in Comparative Example 1 not containing 4-methoxyphenol, and could be more effectively suppressed as compared with Comparative Example 2 containing 4-methoxyphenol in a larger amount.

As a result, the polymer compositions according to Examples of the present invention could effectively achieve both thermal stability and thermal deterioration-resistant characteristics in a well-balanced manner.

### INDUSTRIAL APPLICABILITY

The present invention can provide a polymer composition excellent in thermal stability and thermal deterioration-resistant characteristics, and a molded article and an optical member each containing the polymer composition.

## Claims

1. A polymer composition comprising:
a polymer including a structural unit derived from a (meth)acrylate and a structural unit derived from (meth)acrylic acid; and
at least one compound (A) selected from the group consisting of 4-tert-butylcatechol, 6-tert-butyl-2,4-xylenol, paramethoxyphenol, hydroquinone, 2,2,6,6-tetramethylpiperidinyl-1-oxile, 4-hydroxy-2,2,6,6-tetramethylpiperidinyl-1-oxile, and triphenyl verdazyl, wherein
a content of the compound (A) is 1 ppm by mass to 10 ppm by mass.

2. The polymer composition according to claim 1,
wherein the content of the compound (A) is 1 ppm by mass to 7 ppm by mass.

3. The polymer composition according to claim 1 or 2, wherein the compound (A) is 4-methoxyphenol.

4. The polymer composition according to any one of claims 1 to 3, wherein
with respect to a total content 100 mol% of all structural units contained in the polymer,
a content of the structural unit derived from a (meth)acrylate is 70 mol% to 99.99 mol%, and
a content of the structural unit derived from (meth)acrylic acid is 0.01 mol% to 30.0 mol%.

5. The polymer composition according to any one of claims 1 to 4, wherein
the structural unit derived from a (meth)acrylate is a structural unit derived from methyl methacrylate, and
the structural unit derived from (meth)acrylic acid is a structural unit derived from methacrylic acid.

6. The polymer composition according to any one of claims 1 to 5, wherein the polymer further includes a glutaric anhydride structural unit.

7. The polymer composition according to claim 6, wherein
with respect to a total content 100 mol% of all structural units contained in the polymer,
a content of the structural unit derived from a (meth)acrylate is 70 mol% to 99.98 mol%,
a content of the structural unit derived from (meth)acrylic acid is 0.01 mol% to 20.0 mol%, and
a content of the glutaric anhydride structural unit is 0.01 mol% to 10 mol%.

8. A molded article comprising the polymer composition according to any one of claims 1 to 7.

9. An optical member comprising the molded article according to claim 8.
